# EUROPEAN PATENT APPLICATION

(11) **EP 4 471 301 A1**
(43) Date of publication of application: **04.12.2024**
(21) Application number: 24178931.2
(22) Date of filing: 29.05.2024
(51) Int. Cl.: F16J 1/00, F04B 1/124, F04B 53/14, F16J 9/28

(54) **PISTONS FOR PISTON PUMPS**

(30) Priority: 31.05.2023 US 202318204208
(71) Applicant: Hamilton Sundstrand Corporation, Charlotte, NC 28217-4578 (US)
(72) Inventor: HAUSER, Charles, Rockford, IL 61007 (US); GOY, Edward W., Crystal Lake, IL 60014 (US); SHOOK, Ryan, Loves Park, IL 61111 (US)
(74) Representative: Dehns

(57) **Abstract**

In accordance with at least one aspect of this disclosure, a system includes, a piston (102) configured to seat within a bore defined in a barrel of a pump. The piston (102) includes a head portion (110) and a body portion (112), where the head portion is configured to be removably coupled to the body portion. An annular groove (114) is formed between the head portion and the body portion with the head portion and the body portion coupled. In certain embodiments, the body portion can include an annular ledge configured to form a seat of the annular groove with the head portion and the body portion coupled. The annular groove is configured to seat a piston ring (118).

## Description

### TECHNICAL FIELD

The present disclosure relates to pistons and piston rings (e.g., for piston pumps).

### BACKGROUND

Conventional piston pump piston rings are made from metals that offer good sealing performance but are required to be both ductile and split to allow installation on the piston itself. However, this limits the materials that can be used for the piston ring.

The conventional techniques have been considered satisfactory for their intended purpose. However, there is an ever present need for improved systems and methods for more durable and solid piston rings. This disclosure provides a solution for this need.

### SUMMARY

In accordance with at least one aspect of this disclosure, a system includes, a piston configured to seat within a bore defined in a barrel of a pump. The piston includes a head portion and a body portion, where the head portion is configured to be removably coupled to the body portion. An annular groove is formed between the head portion and the body portion with the head portion and the body portion coupled. In certain embodiments, the body portion can include an annular ledge configured to form a seat of the annular groove with the head portion and the body portion coupled. The annular groove is configured to seat a piston ring.

In embodiments, the system includes the piston ring seated in the annular groove configured to form a hydrodynamic seal between the piston ring and the bore of the barrel. In embodiments, the piston ring can include a continuous circumference such that the piston ring forms a single contiguous ring (e.g., with no break or interruption in the ring). In certain embodiments, the piston ring can be of a ceramic material. In certain embodiments, the piston ring can be of tungsten carbide. In certain embodiments, the piston ring can be of tool steel. In embodiments, the piston ring can be configured to be inserted between the head portion and the body portion without deforming the annular shape of the piston ring.

In certain embodiments, the head portion can include a recess configured to receive a fastener extending through a distal end of the head portion to retain the head portion to the body portion.

In certain embodiments, the head portion can include a bolt type head at a proximal end thereof and a threaded member at a distal end thereof. In certain such embodiments, the head portion can be configured to thread into a threaded recess of the body portion via interaction of the threaded member and the threaded recess.

In certain embodiments, the head portion can include a nut type head at a proximal end thereof and a threaded recess at a distal end thereof. In certain such embodiments, the head portion can be configured to thread onto a threaded member of the body portion via interaction of the threaded recess and the threaded member.

In certain embodiments, the system can include a plurality of pistons and respective piston rings as described above, configured to seat within a respective bore of a barrel having a plurality of bores.

In accordance with at least one aspect of this disclosure, a method can include, forming a piston configured to be inserted into a barrel of a pump, the piston including a head portion and a body portion, forming a piston ring configured to be disposed around the piston between the head portion and the body portion, and installing the piston ring onto the body portion before installing the head portion onto the body portion. The method can include installing the head portion onto the body portion such that the piston ring is seated in an annular groove between the head portion and the body portion.

In certain embodiments, installing the head portion can include attaching the head portion to the body portion with a fastener extending through head portion to retain the head portion to the body portion and to retain the piston ring therebetween.

In certain embodiments, installing the head portion can include torqueing the head portion into a threaded recess at a proximal end of the body portion to retain the head portion to the body portion and to retain the piston ring therebetween.

In certain embodiments, installing the head portion can include torqueing the head portion onto a threaded member extending from a proximal end of the body portion to retain the head portion to the body portion and to retain the piston ring therebetween.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, other embodiments thereof will be described in detail herein below with reference to certain figures, wherein:
Fig. 1 is an exploded perspective view of an embodiment of a system in accordance with this disclosure, showing an embodiment of a piston;
Fig. 2 is a perspective view of an embodiment of the system of Fig. 1, showing a barrel of a pump and at least one piston therein;
Fig. 3A is a front elevation view of the piston of Fig. 1, showing an embodiment of a head portion of the piston;
Fig. 3B is a side cross-sectional view of the piston of Fig. 3A, showing an embodiment of the head portion attached to an embodiment of a body portion of the piston;
Fig. 4A is a front elevation view of the piston of Fig. 1, showing another embodiment of a head portion of the piston;
Fig. 4B is a side cross-sectional view of the piston of Fig. 4A, showing an embodiment of the head portion attached to another embodiment of a body portion of the piston;
Fig. 5A is a front elevation view of the piston of Fig. 1, showing another embodiment of a head portion of the piston; and
Fig. 5B is a side cross-sectional view of the piston of Fig. 5A, showing an embodiment of the head portion attached to another embodiment of a body portion of the piston.

### DETAILED DESCRIPTION

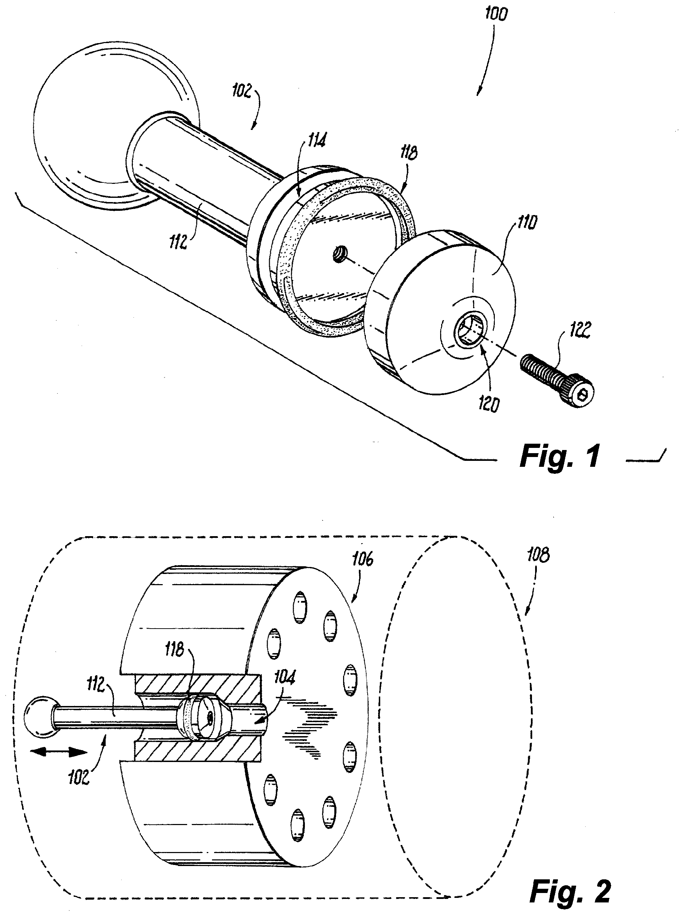

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-5B.

With reference to Figs. 1 and 2, in accordance with at least one aspect of this disclosure, a system 100 can include a piston 102 configured to seat within a bore 104 defined in a barrel 106 of a pump 108 (e.g., as shown in Fig. 2). The piston 102 can include a head portion 110 and a body portion 112, where the head portion 110 is configured to be removably coupled to the body portion 112, for example as shown in the exploded view of Fig. 1. An annular groove 114 is formed between the head portion 110 and the body portion 112 with the head portion 110 and the body portion 112 coupled. In certain embodiments, the body portion 112 can include an annular ledge 116 configured to form a seat of the annular groove 114 with the head portion 110 and the body portion 112 coupled. The annular groove 114 can be configured to seat a piston ring 118 in the groove 114, e.g., on the ledge 116.

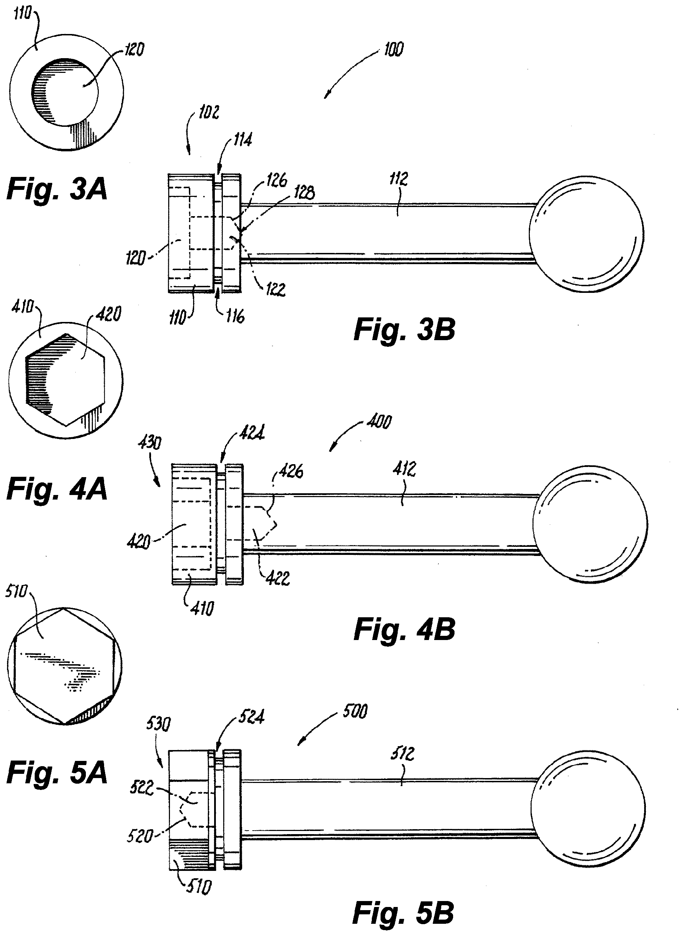

In embodiments, the piston ring 118 is seated in the annular groove 114 configured to form a hydrodynamic seal between the piston ring 118 and the bore 104 of the barrel 106. In embodiments, e.g., as shown in Fig. 1, the piston ring 118 can include a continuous circumference such that the piston ring 118 forms a single contiguous ring (e.g., with no break or interruption in the ring). In certain embodiments, the piston ring 118 can be of a ceramic material, e.g., as shown. In certain embodiments, the piston ring 118 can be of tungsten carbide. In certain embodiments, the piston ring 118 can be of tool steel (e.g., a chromium molybdenum hot work steel, such as H13). In embodiments, the piston ring 118 can be configured to be inserted between the head portion 110 and the body portion 112 without deforming the annular shape of the piston ring 118. For the sake of clarity, the piston ring 118 is not shown in the groove 114 in Figs. 3B, 4B, or 5B.

With reference now to Figs 1 and 3A-3B, in certain embodiments, the head portion 110 can include a recess or aperture 120 at a proximal end 130 thereof, configured to receive a fastener 122 extending through a distal end 124 of the head portion 110 and into a recess 126 in a proximal end 128 of the body portion 112 to retain the head portion 110 to the body portion 112. In certain embodiments, the system 100 can include a plurality of pistons 102 and respective piston rings 118 as described above, configured to seat within a respective bore 104 of the barrel 108 having a plurality of bores 104.

In certain embodiments, as shown in Figs. 4A and 4B, the head portion 410 of the piston 410 can include a bolt type head 410 at a proximal end 430 thereof. A recess 420 can be defined in the proximal end 430 of the bolt head 410 configured to receive a torqueing tool. A threaded member 422 can be defined at and extending from a distal end 424 of the bolt head 410. In certain such embodiments, the head portion 410 can be configured to thread into a threaded recess 426 of the body portion 412 as the bolt head 410 is torqued. While a hexagonal bolt type head 410 is shown, any suitable head shape configured to be torqued by a torqueing tool is contemplated herein.

In certain embodiments, as shown in Figs. 5A and 5B, the head portion 510 of the piston 502 can include a nut type head 510 at a proximal end 530 thereof and a threaded recess 520 at a distal end 524 thereof. In certain such embodiments, the head portion 510 can be configured to thread onto a threaded member 522 defined at and extending from the proximal end 528 of the body portion 512 as the nut head 510 is torqued. While a hexagonal nut type head 510 is shown, any suitable head shape configured to be torqued by a torqueing tool is contemplated herein.

In accordance with at least one aspect of this disclosure, a method (e.g., a method of making and assembly) of a piston can include, forming a piston (e.g., piston 102, 402, 502) configured to be inserted into a barrel (e.g., barrel 106) of a pump (e.g., pump 108). Forming the piston can include forming a head portion (e.g., head portion 110, 410, 510) and a body portion (e.g., body portion 112, 412, 512). The method can include forming a piston ring (e.g., ring 118) configured to be disposed around the piston between the head portion and the body portion. The method of assembling can include installing the piston ring onto the body portion before installing the head portion onto the body portion, such that when the head portion is torqued onto the body portion, or fastened thereon, the piston ring is sandwiched between the head portion and the body portion. The method can include installing the head portion onto the body portion such that the piston ring is seated in an annular groove (e.g., in groove 114 and seated on the ledge 116) between the head portion and the body portion.

In certain embodiments, installing the head portion can include attaching the head portion to the body portion with a fastener extending through head portion to retain the head portion to the body portion and to retain the piston ring therebetween, for example as shown in Figs. 3A and 3B.

In certain embodiments, installing the head portion can include torqueing the head portion into a threaded recess at a proximal end of the body portion to retain the head portion to the body portion and to retain the piston ring therebetween, for example as shown in Figs. 4A and 4B.

In certain embodiments, installing the head portion can include torqueing the head portion onto a threaded member extending from a proximal end of the body portion to retain the head portion to the body portion and to retain the piston ring therebetween, for example as shown in Figs. 5A and 5B.

Embodiments of the piston and piston ring as described herein provide for a two-piece piston to allow for both non-split and/or non-ductile material piston rings to be installed, without breaking or deforming the shape of the piston ring.

Embodiments include a piston pump having a two-piece piston, e.g., as shown, which can be manufactured (e.g., machined) such that the piston head can be removed mechanically from the piston to allow for a hard or brittle, non-split piston ring to be installed, such as a ceramic piston ring, for example.

Embodiments allow for the piston head to be installed in a plurality of ways, including (but not limited to) by screw thread located on the head or on the piston itself (e.g., Figs. 4B and 5B), or with a bolt through the head into the piston (e.g., Fig. 1 and Fig. 3B). The mechanical torqueing surface of the piston head can be a centrally-located socket of between 3 and 8 sides (e.g., Fig. 4A), or the shape of the head itself allows for the use of a wrench of between 3 and 8 sides to grip onto the head for torqueing the head itself (e.g., Fig. 5A) into the piston or onto the piston or as a grip for bolt installation. The piston head can be installing using a either clockwise or counterclockwise torque direction, and/or with or without the appropriate retention features (e.g., softer-material pellets or rings in the male or female thread).

Embodiments allow for harder, solid piston rings, which can provide higher function and wear (PV) values to be achieved by the pistons, and, therefore, higher piston velocities, which translates into larger strokes, lower weights, and higher overall efficiencies. A solid ring (e.g., with no breaks in the ring) can also reduce leakage, increasing volumetric efficiencies.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure.

## Claims

1. A system, comprising:
a piston (102) configured to seat within a bore (104) defined in a barrel of a pump (108), the piston (102) including a head portion (110) and a body portion (112), the head portion configured to be removably coupled to the body portion, wherein an annular groove is formed between the head portion and the body portion with the head portion and the body portion coupled, wherein the annular groove is configured to seat a piston ring (118).

2. The system of claim 1, further comprising, the piston ring (118) seated in the annular groove configured to form a hydrodynamic seal between the piston ring (118) and the bore of the barrel.

3. The system of claim 2, wherein the piston ring (118) includes a continuous circumference such that the piston ring (118) forms a single contiguous ring.

4. The system of claim 3, wherein the piston ring (118) is of a ceramic material.

5. The system of claim 3, wherein the piston ring (118) is of tungsten carbide.

6. The system of claim 3, wherein the piston ring (118) is of tool steel.

7. The system of claim 3, wherein the piston ring (118) is configured to be inserted between the head portion and the body portion without deforming the annular shape of the piston ring (118).

8. The system of any preceding claim, wherein the head portion includes a recess configured to receive a fastener extending through a distal end of the head portion to retain the head portion to the body portion.

9. The system of any preceding claim, wherein the head portion includes a bolt type head at a proximal end thereof and a threaded member at a distal end thereof, the head portion configured to thread into a threaded recess of the body portion to retain the head portion to the body portion, or wherein the head portion includes a nut type head at a proximal end thereof and a threaded recess at a distal end thereof, the head portion configured to thread onto a threaded member of the body portion to retain the head portion to the body portion.

10. The system of any preceding claim, further comprising, a plurality of pistons configured to seat within a respective bore defined in the barrel of the pump, wherein each piston (102) includes a respective head portion and a respective body portion, the respective head portion configured to be removably coupled to the respective body portion, wherein a respective annular groove is formed between the respective head portion and the respective body portion when coupled configured to seat a respective piston ring (118), and optionally . further comprising, a plurality of piston rings each seated in the respective annular groove configured to form a hydrodynamic seal between the respective piston ring (118) and the respective bore of the barrel.

11. A method comprising:
forming a piston (102) configured to be inserted into a barrel of a pump, the piston (102) including a head portion and a body portion;
forming a piston ring (118) configured to be disposed around the piston (102) between the head portion and the body portion; and
installing the piston ring (118) onto the body portion before installing the head portion onto the body portion.

12. The method of claim 11, further comprising, installing the head portion onto the body portion such that the piston ring (118) is seated in an annular groove between the head portion and the body portion.

13. The method of claim 11 or 12, wherein installing the head portion includes attaching the head portion to the body portion with a fastener extending through head portion to retain the head portion to the body portion and to retain the piston ring (118) therebetween.

14. The method of any of claims 11 to 13, wherein the head portion includes a threaded member extending from a distal end of the head portion, wherein installing the head portion includes torqueing the head portion into a threaded recess at a proximal end of the body portion to retain the head portion to the body portion and to retain the piston ring (118) therebetween.

15. The method of any of claims 11 to 14 wherein the head portion includes a threaded recess defined in a distal end of the head portion, wherein installing the head portion includes torqueing the head portion onto a threaded member extending from a proximal end of the body portion to retain the head portion to the body portion and to retain the piston ring (118) therebetween.
